# EUROPEAN PATENT APPLICATION

(11) **EP 2 366 742 A1**
(43) Date of publication of application: **21.09.2011**
(21) Application number: 09826061.5
(22) Date of filing: 07.11.2009
(51) Int. Cl.: C08L 101/00, C08G 59/50, C08G 73/12, C08J 5/24, C08L 63/00

(54) **THERMOSETTING RESIN COMPOSITION AND PREPREG UTILIZING SAME**

(30) Priority: 13.11.2008 JP 2008291181; 13.11.2008 JP 2008291306
(71) Applicant: Toho Tenax CO., LTD., Tokyo 100-8585 (JP)
(72) Inventor: NUMATA Hiroshi, Sunto-gun Shizuoka 411-8720 (JP); KAWAMOTO Hironori, Sunto-gun Shizuoka 411-8720 (JP)
(74) Representative: Hallybone, Huw George
(86) International application number: PCT/JP2009/069009
(87) International publication number: WO 2010/055811

(57) **Abstract**

Provided are a thermosetting resin composition suitable for forming a composite material that has excellent mechanical characteristics, such as wet heat resistance and toughness, and also a prepreg using the same. The thermosetting resin composition includes at least a component [A] including thermoplastic resin particles and a thermosetting resin [B]. The component [A] includes a melt blend of at least the components [A-1] and [A-2] given below. In the particles, the component [A-1] and the component [A-2] may be in a non-compatibilized state or a compatibilized state.
Component [A-1]: Thermoplastic resin insoluble in the thermosetting resin [B]
Component [A-2]: Thermoplastic resin soluble in the thermosetting resin [B]

## Description

### Technical Field

The present invention relates to a thermosetting resin composition suitable for forming a composite material that has excellent mechanical characteristics, such as high wet heat resistance and toughness, and also to a prepreg using the resin composition as a matrix resin.

### Background Art

Fiber-reinforced plastic (FRP) is a composite material made of a matrix resin including a thermosetting resin, such as an unsaturated polyester resin, an epoxy resin, or a thermosetting polyimide resin, or a thermoplastic resin, such as polyethylene, polypropylene, polyamide, polyphenylene sulfide (PPS), or polyether ether ketone (PEEK), together with a fiber-reinforcing material such as carbon fibers, glass fibers, or aramid fibers. FRP is lightweight and has excellent strength characteristics, and therefore, in recent years, it has been used in a wide range of fields from the aerospace industry to general industrial fields.

Generally, a matrix resin is dissolved in a solvent, then a curing agent and additives are added thereto, and a fiber-reinforcing material such as cloth, mat, or roving is impregnated with the obtained resin composition to give a prepreg, a molded intermediary substrate for FRP. For example, in aircraft applications, in terms of weight reduction and strength, a honeycomb sandwich panel using such a prepreg as a faceplate has been used as an aircraft structural material (e.g., Patent Document 1).
Further, in recent years, in aircraft applications, applications for purposes other than as honeycomb sandwich panels have also been attempted. However, in aircraft materials, which are required to have particularly high-level heat resistance and toughness, conventional FRP has a problem in that the mechanical properties thereof, such as toughness and impact resistance, remarkably decrease under high-humidity and high-temperature conditions. Accordingly, there is a demand for improvement in toughness, impact resistance, and like mechanical properties while maintaining the basic performance, such as heat resistance and wet heat resistance.

### Prior Art Documents

### Patent Documents

Patent Document 1: JP-A-2006-289646

### Summary of the Invention

### Problems that the Invention is to Solve

An object of the invention is to provide a thermosetting resin composition suitable for forming a composite material that has excellent mechanical properties, especially excellent impact resistance and toughness, even in a high-humidity, high-temperature environment; and also a prepreg using the thermosetting resin composition.

### Means for Solving the Problems

The object mentioned above is achieved by the embodiments of the invention defined in the Claims, claims 1 to 13.

A first embodiment of the invention is a thermosetting resin composition including at least a component [A] including thermoplastic resin particles and a thermosetting resin [B], characterized in that the thermoplastic resin particles include a melt blend of at least the following components [A-1] and [A-2].
Component [A-1]: Thermoplastic resin insoluble in the thermosetting resin [B]
Component [A-2]: Thermoplastic resin soluble in the thermosetting resin [B]

In the invention, a thermoplastic resin insoluble in the thermosetting resin [B] means the following thermoplastic resin: when such a thermoplastic resin in the form of particles, such as pellets, a ground product, or a powder, is put into the thermosetting resin [B] and stirred at a temperature not higher than the curing temperature of the thermosetting resin [B], the particle size hardly changes. A thermoplastic resin soluble in the thermosetting resin [B] means the following thermoplastic resin: when such a thermoplastic resin in the form of particles, such as pellets, a ground product, or a powder, is put into the thermosetting resin [B] and stirred at a temperature not higher than the curing temperature of the thermosetting resin [B], the particles at least partially dissolve in the [B], whereby the particles decrease in size or disappear.

A second embodiment of the invention is a thermosetting resin composition characterized in that in the first embodiment, the content of the component [A] including thermoplastic resin particles is 1 to 50% by weight of the entire thermosetting resin composition.

A third embodiment of the invention is a thermosetting resin composition characterized in that in the first embodiment, the component [A-1] and component [A-2] forming the component [A] including thermoplastic resin particles are in a non-compatibilized state in the particles. In the invention, the component [A-1] and the component [A-2] being in a non-compatibilized state means that when the Tg of a mixture of the component [A-1] and the component [A-2] is measured, two separate Tgs based on the component [A-1] and the component [A-2] are observed.

A fourth embodiment of the invention is a thermosetting resin composition characterized in that in the first embodiment, the component [A-1] and component [A-2] forming the component [A] including thermoplastic resin particles are in a compatibilized state in the particles. In the invention, the component [A-1] and the component [A-2] being in a compatibilized state means that when the Tg of a mixture of the component [A-1] and the component [A-2] is measured, two separate Tgs based on the component [A-1] and the component [A-2] are not observed, but mainly one Tg is observed.

A fifth embodiment of the invention is a thermosetting resin composition characterized in that in the first embodiment, the thermosetting resin composition includes, in addition to the component [A] and the thermosetting resin [B], a thermoplastic resin [C] other than the component [A] and a curing agent [D].

A sixth embodiment of the invention is a thermosetting resin composition characterized in that in the first embodiment, the thermosetting resin [B] includes at least an epoxy resin.

A seventh embodiment of the invention is a thermosetting resin composition characterized in that in the first embodiment, the thermosetting resin [B] includes at least a tri- or higher functional epoxy resin.

An eighth embodiment of the invention is a thermosetting resin composition characterized in that in the first embodiment, the curing agent [D] includes at least an aromatic-amine-based curing agent.

A ninth embodiment of the invention is thermoplastic resin particles including a melt blend of at least the components [A-1] and [A-2] given below, characterized in that the component [A-1] and the component [A-2] are in a non-compatibilized state in the particles.
Component [A-1]: Thermoplastic resin insoluble in a thermosetting resin
Component [A-2]: Thermoplastic resin soluble in a thermosetting resin

A tenth embodiment of the invention is thermoplastic resin particles including a melt blend of at least the components [A-1] and [A-2] given below, characterized in that the component [A-1] and the component [A-2] are in a compatibilized state in the particles.
Component [A-1]: Thermoplastic resin insoluble in a thermosetting resin
Component [A-2]: Thermoplastic resin soluble in a thermosetting resin

An eleventh embodiment of the invention is a prepreg including a fiber-reinforcing material sheet impregnated with a thermosetting resin composition. The thermosetting resin composition includes at least a component [A] including thermoplastic resin particles and a thermosetting resin [B]. The thermoplastic resin particles include a melt blend of at least the following components [A-1] and [A-2].
Component [A-1]: Thermoplastic resin insoluble in the thermosetting resin [B]
Component [A-2]: Thermoplastic resin soluble in the thermosetting resin [B]

A twelfth embodiment of the invention is a prepreg characterized in that in the eleventh embodiment, the component [A-1] and component [A-2] forming the component [A] including thermoplastic resin particles are in a non-compatibilized state in the particles.

A thirteenth embodiment of the invention is a prepreg characterized in that in the eleventh embodiment, the component [A-1] and component [A-2] forming the component [A] including thermoplastic resin particles are in a compatibilized state in the particles.

### Advantage of the Invention

When a prepreg using the thermosetting resin composition of the invention as a matrix resin is laminated, followed by curing and molding, a composite material having high heat resistance and wet heat resistance, together with improved mechanical characteristics, such as impact resistance (compression strength after impact, CAI) and toughness, is obtained.

### Mode for Carrying Out the Invention

The thermosetting resin composition of the invention is a thermosetting resin composition including at least a component [A] including thermoplastic resin particles (including at least a component [A-1] and a component [A-2]) and a thermosetting resin [B], which is obtained as follows. First, the thermoplastic resin [A-1] that is insoluble in the thermosetting resin [B] and the thermoplastic resin [A-2] that is soluble in the thermosetting resin [B] are melt-blended and then ground into particles, and the obtained thermoplastic resin particles are mixed with the thermosetting resin [B] as a toughener. In the invention, a thermoplastic resin soluble or insoluble in the thermosetting resin [B] is defined as follows. When a thermoplastic resin in the form of particles, such as pellets, a ground product, or a powder, is put into the thermosetting resin [B] and stirred at a temperature not higher than the curing temperature of the thermosetting resin [B], in the case where the particle size hardly changes, such a thermoplastic resin is defined as insoluble, while in the case where the particles at least partially dissolve in the thermosetting resin [B], whereby the particles decrease in size or disappear, such a thermoplastic resin is defined as soluble.

When, for example, a glycidyl-amino-group-containing polyfunctional epoxy resin is used as the thermosetting resin [B], the thermoplastic resin [A-1] insoluble in the thermosetting resin [B] may be polyetheretherketone (PEK), polyethylene terephthalate (PET), polyethylene naphthalate (PEN), a polyamide such as nylon 6, nylon 12, amorphous nylon, or amorphous polyimide, or the like. When, for example, a glycidyl-amino-group-containing polyfunctional epoxy resin is used as the thermosetting resin [B], the thermoplastic resin [A-2] soluble in the thermosetting resin [B] may be polyethersulfone (PES), polyetherimide (PEI), or the like. Depending on the kind of thermosetting resin used, specific thermoplastic resins are soluble or insoluble therein. Therefore, the thermoplastic resins [A-1] and [A-2] in the invention are selected strictly by a specific combination with the thermosetting resin [B].

As the component [A], it is also possible to use two or more different kinds of components [A] in arbitrary proportions. In order to achieve a uniform addition to the resin composition while maintaining moldability, it is neccessary that the thermoplastic resins are in the form of particles. Such thermoplastic resin particles preferably have an average particle diameter within a range of 0.1 to 100 µm. When it is less than 0.1 µm, the particles are likely to aggregate, resulting in an aggregate with high bulk density. This may cause a remarkable increase in the viscosity of the thermosetting resin composition or make it difficult to add a sufficient amount. Meanwhile, in the case where it is more than 100 µm, when the resulting thermosetting resin composition is sheeted, it may be difficult to obtain a sheet shape with a uniform thickness. The particles more preferably have an average particle diameter of 1 to 50 µm.

The content (mixing proportion) of the component [A] including thermoplastic resin particles is preferably 1 to 50% by weight, more preferably 5 to 40% by weight, of the entire thermosetting resin composition. The method for mixing is not limited, but it is preferable to perform mixing as uniformly as possible. By blending the thermoplastic resin particles as above, a cured product obtained by curing the thermosetting resin composition of the invention can be provided with improved mechanical characteristics such as impact resistance and interlaminar fracture toughness with little loss of heat resistance.

In the invention, the component [A-1] and component [A-2] forming the component [A] including thermoplastic resin particles are in a non-compatibilized state or a compatibilized state in the particles as a mixture (melt blend). When they are in a non-compatibilized state, in particular, a composite material with high interlaminar fracture toughness is likely to be obtained. Meanwhile, when they are in a compatibilized state, in particular, a composite material with high impact resistance is likely to be obtained.

In the case where the component [A-1] and the component [A-2] are compatibilized, when the Tg of a mixture thereof is measured, the Tgs based on the component [A-1] and the component [A-2] are observed as one Tg. Meanwhile, in the case where the component [A-1] and the component [A-2] are not compatibilized in the particles (when they are phase-separated), two separate Tgs are observed. The blending ratio between the component [A-1] and the component [A-2] in a melt blend depends on the kinds and combination of the resins, and is not limited, but is preferably within the following range: component [A-1]:component [A-2] = 5 to 95 parts by weight:95 to 5 parts by weight.

Examples of thermosetting resins for use as the component [B] of the invention are thermosetting resins mainly including epoxy resins, bismaleimide resins, oxetane resins, benzoxazine resins, polyester resins, vinyl resins, cyanate ester resins, etc.

A preferred example of such a thermosetting resin is an epoxy resin. Epoxy resins are not limited, and known epoxy resins are usable. Specific examples thereof include glycidyl-amino-group-containing polyfunctional epoxy resins such as N,N,N',N'-tetraglycidyldiaminodiphenylmethane (e.g., jER604 manufactured by JAPAN EPOXY RESINS, Sumiepoxy ELM-434 and ELM-120 manufactured by SUMITOMO CHEMICAL, Araldite MY9634 and MY-720 manufactured by ASAHI-CIBA, and Epotohto YH434 manufactured by TOHTO KASEI) and N,N,O-triglycidyl-p-aminophenol (e.g., Sumiepoxy ELM-100 manufactured by SUMITOMO CHEMICAL) ; bifunctional epoxy resins such as bisphenol-type epoxy resins, alcohol-type epoxy resins, hydrophthalic-acid-type epoxy resin, dimer-acid-type epoxy resins, and alicyclic epoxy resins; novolac-type epoxy resins such as phenol-novolac-type epoxy resins and cresol-novolac-type epoxy resins; and like polyfunctional epoxy resins. Further, various modified epoxy resins, such as urethane-modified epoxy resins and rubber-modified epoxy resins, are also usable. Preferred epoxy resins include, in addition to the above-mentioned glycidyl-amino-group-containing polyfunctional epoxy resins, bisphenol-type epoxy resins, alicyclic epoxy resins, phenol-novolac-type epoxy resins, cresol-novolak-type epoxy resins, and urethane-modified bisphenol-A epoxy resins.

Examples of bisphenol-type epoxy resins include bisphenol-A-type resins, bisphenol-F-type resins, bisphenol-AD-type resins, and bisphenol-S-type resins. More specific examples thereof include, as commercially available resins, jER815, jER828, jER834, jER1001, and jER807 manufactured by JAPAN EPOXY RESINS, Epomik R-710 manufactured by MITSUI PETROCHEMICAL, and EXA1514 manufactured by DAINIPPON INK.

Examples of alicyclic epoxy resins include, as commercially available resins, Araldite CY-179, CY-178, CY-182, and CY-183 manufactured by ASAHI-CIBA. Examples of phenol-novolac-type epoxy resins include jER152 and jER154 manufactured by JAPAN EPOXY RESINS, DEN431, DEN485, and DEN438 manufactured by DOW CHEMICAL, and Epiclon N740 manufactured by DAINIPPON INK. Examples of cresol-novolak-type epoxy resins include Araldite ECN1235, ECN1273, and ECN1280 manufactured by ASAHI-CIBA and EOCN102, EOCN103, and EOCN104 manufactured by NIPPON KAYAKU. Further, examples of urethane-modified bisphenol-A epoxy resins include Adeka Resin EPU-6 and EPU-4 manufactured by ASAHI DENKA.

In the invention, it is preferable that the epoxy resin includes at least a tri- or higher functional epoxy resin. Examples of epoxy resins having three functional groups include ELM-100, ELM-120, and YX-4 manufactured by SUMITOMO CHEMICAL, MY0510 manufactured by HUNTSMAN, and EXD506 manufactured by DAINIPPON INK.

The above epoxy resins may be suitably selected, and used alone or in combination of two or more kinds. Further, as mentioned above, the epoxy resin may also include a thermoplastic resin [C] other than the component [A] without interfering with the advantages of the invention. The thermoplastic resin [C], for example, dissolves in an epoxy resin during the epoxy resin curing process to increase the matrix viscosity, and thus is effective in preventing a decrease in the viscosity of the epoxy resin composition. Such thermoplastic resins may also be used in a state of being partially or completely dispersed in an epoxy resin.

The thermosetting resin composition of the invention may suitably contain a curing agent and an accelerator. For example, an epoxy resin is usually used with a known curing agent, and the same applies to the invention. A curing agent [D] used in the invention may be any of those usually used as curing agents for epoxy resins, and aromatic-amine-based curing agents are preferable. Specific examples thereof include diaminodiphenylsulfone (DDS), diaminodiphenylmethane (DDM), diaminodiphenyl ether (DPE), and phenylenediamine. They may be used alone, or a mixture of two or more kinds may also be used. DDS is preferable for imparting heat resistance. An aromatic-amine-based curing agent may also be microencapsulated within a melamine resin or the like, for example. When the epoxy resin composition of the invention contains an aromatic-amine-based curing agent, a cured product of the epoxy resin composition can develop high heat resistance. The same applies to the case where a resin other than epoxy resins, for example, aromatic bismaleimide or alkenyl phenol, is used as the thermosetting resin. The loading of curing agent may be a desired loading suitably determined considering the presence or absence of an accelerator, the amount thereof, the chemical reaction stoichiometry with the thermosetting resin, the curing rate of the composition, etc.

In the invention, it is also preferable that the thermosetting resin composition contains a polyisocyanate compound in addition to the component [A] and the thermosetting resin [B].

The polyisocyanate compound is not limited as long as it is a compound having two or more isocyanate groups in the molecule and reacts with an epoxy resin to produce a thickening effect. The polyisocyanate compound may be pre-reacted with the component [B] before use. Such a pre-reaction has a suppressing effect on the hygroscopicity of the resulting thermosetting resin composition, thereby suppressing the performance degradation due to moisture absorption during the production, storage, and use of a prepreg. In addition, the pre-reaction also has a stabilizing effect on the viscosity of the resulting thermosetting resin composition. The polyisocyanate compound serves to adjust the resin flow during molding/curing and improve moldability.

In the invention, the content (mixing proportion) of the component [A] is preferably 1 to 50% by weight, more preferably 5 to 40% by weight, of the entire thermosetting resin composition as mentioned above. The loading of the polyisocyanate compound is not limited and can be suitably selected without affecting handleability, etc., in view of the production of thermosetting resin compositions, prepregs, and composite materials. A preferred range is, for example, about 0.1 to about 15% by weight of the total weight of the thermosetting resin composition. When it is less than 0.1% by weight, a thickening effect on the thermosetting resin composition, which is expected to result from the addition, will be insufficient. When it is more than 15% by weight, a prepreg is provided with reduced tack and drape. This may impair the handleability of the prepreg or cause foaming during curing, or may further decrease the toughness of the cured product. It is preferably 0.5 to 10% by weight, and still more preferably 1 to 7% by weight.

The thermoplastic resin [C] means a thermoplastic resin that is not used as the component [A] in a specific combination. Examples thereof include thermoplastic resins such as polyethersulfone (PES) and polyetherimide (PEI), as well as thermoplastic polyimide, polyamidoimide, polysulfone, polycarbonate, polyether ether ketone, polyamides such as nylon 6, nylon 12, and amorphous nylon, aramid, arylate, polyester carbonate, etc. Of these, thermoplastic polyimide, polyetherimide (PEI), polyethersulfone (PES), polysulfone, and polyamidoimide can be mentioned as preferred examples in terms of heat resistance. Further, the thermoplastic resin [C] used for the thermosetting resin composition of the invention may also be a rubber component. Typical examples of rubber components include rubber components such as carboxy-terminated styrene butadiene rubber and carboxy-terminated hydrogenated acrylonitrile butadiene rubber.

In the invention, it is preferable that the loading of the thermoplastic resin [C] other than the component [A] is 10 to 50% by weight of the entire thermosetting resin composition. When it is less than 10% by weight, the resulting prepreg and composite material have insufficient impact resistance. When it is more than 50% by weight, this may provide a resin composition with increased viscosity and poor moldability/handleability. It is preferably 12 to 45% by weight, and still more preferably 13 to 40% by weight.

The thermosetting resin composition of the invention includes the components [A-1], [A-2], and [B] mentioned above as essentials. If necessary, the thermosetting resin composition may also suitably contain various additives other than the components mentioned above, such as accelerators, reactive diluents, fillers, antioxidants, flame retarders, and pigments without interfering with the advantages of the invention. Examples of accelerators include anhydrides, Lewis acids, dicyandiamide, imidazoles, and like basic curing agents, urea compounds, and organic metal salts. More specifically, examples of anhydrides include phthalic anhydride, trimellitic anhydride, and pyromellitic dianhydride. Examples of Lewis acids include boron trifluoride salts, more specifically including BF₃ monoethyl amine and BF₃ benzylamine. Examples of imidazoles include 2-ethyl-4-methylimidazole, 2-ethylimidazole, 2,4-dimethylimidazole, and 2-phenylimidazole. Examples thereof also include 3- [3,4-dichlorophenyl] -1,1-dimethylurea, which is a urea compound, and Co[III]acetylacetonate, which is an organic metal salt. Examples of reactive diluents include polypropylene diglycol/diglycidyl ether, phenyl glycidyl ether, are like reactive diluents.

The method for producing the thermosetting resin composition of the invention is not limited, and may be any of known methods. For example, the kneading temperature applied during the production of the resin composition may be within a range of 10 to 160°C. A temperature of more than 160°C allows resin components to undergo thermal degradation or causes a partial curing reaction, and this may cause a decrease in the storage stability of the resulting thermosetting resin composition or a prepreg using the same. A temperature of less than 10°C provides a resin composition with increased viscosity, and it may be practically difficult to perform kneading. It is preferably within a range of 20 to 130°C, and still more preferably 30 to 110°C.

As a kneading mechanical apparatus, a known apparatus may be used. Specific examples thereof include a roll mill, a planetary mixer, a kneader, an extruder, a Banbury mixer, a mixing vessel equipped with a stirring blade, and a horizontal mixing bath. Components may be kneaded in air or in an inert gas atmosphere. Especially when kneading is performed in air, an atmosphere having a controlled temperature and a controlled humidity is preferable. As a non-limiting example, kneading is preferably performed at a constant controlled temperature of 30°C or less or in a low-humidity atmosphere having a relative humidity of 50% RH or less.

The components may be kneaded in one step. Alternatively, it is also possible to add the components one by one to perform kneading in a multi-step manner. When the components are added one by one, they may be added in any order. In particular, as mentioned above, the polyisocyanate compound may be pre-reacted with the component [B] before use. Further, the thermoplastic resin [C] other than the component [A] may be partially or completely pre-dissolved in the component [B] and then served. With respect to the order of kneading/addition, as a non-limiting example, in terms of the storage stability of the resulting thermosetting resin composition and a prepreg made therefrom, it is preferable to add the curing agent in last.

The following will describe a prepreg according to another embodiment of the invention. The prepreg of the invention is a prepreg obtained by impregnating a fiber-reinforcing material sheet with the thermosetting resin composition of the invention obtained as above and having excellent wet heat resistance characteristics. Examples of fiber-reinforcing materials used for the prepreg of the invention include carbon fibers, glass fibers, aromatic polyamide fibers, polyimide fibers, polybenzoxazole fibers, and wholly aromatic polyester fibers. They may be used alone or in combination of two or more kinds. As a non-limiting example, in order to improve the mechanical properties of a composite material, it is preferable to use carbon fibers which have excellent tensile strength. The fiber-reinforcing material is preferably in the form of a sheet, such as a woven fabric, a multiaxial woven fabric, or a unidirectionally oriented product.

It is preferable that in the prepreg of the invention, the content (RC) of the constituent thermosetting resin composition is 15 to 70% by weight. When it is less than 15% by weight, the resulting composite material may have pores or the like, causing a decrease in mechanical characteristics. When it is more than 70% by weight, the reinforcing effect by reinforcing fibers may be insufficient, resulting in practically low mechanical characteristics relative to the weight. It is preferably within a range of 20 to 60% by weight, and more preferably within a range of 30 to 50% by weight. The thermosetting resin composition content (RC) herein is a proportion calculated from the weight change during the decomposition of resins in the prepreg by sulfuric acid decomposition. More specifically, it is a value obtained as follows. A 100 mm x 100 mm specimen is cut from a prepreg. The specimen is weighed, and immersed or boiled in sulfuric acid until the resin content is eluted, followed by filtering. The remaining fibers are washed with water and dried, and the mass thereof is measured for the calculation of the value.

A preferred from of a specific preferred is, but not limited to, for example, a prepreg including a reinforcing fiber layer, which is formed of reinforcing fibers and a resin composition impregnates between the reinforcing fibers, and a resin coating layer, which covers the surface of the reinforcing fiber layer, where the resin coating layer has a thickness of 2 to 50 µm. When it is less than 2 µm, this may result in insufficient tack, causing a remarkable decrease in the molding processability of the prepreg. When it is more than 50 µm, this may make it difficult to wind the prepreg into a roll form with a uniform thickness, causing a remarkable decrease in molding accuracy. It is more preferably 5 to 45 µm, and still more preferably 10 to 40 µm.

As one of the characteristics that an aircraft composite material should have, interlaminar fracture toughness is mentioned. Interlaminar fracture toughness is an approach in which a load is applied to a specimen having cracks formed therein by a predetermined method, and the amount of energy required for forming a crack is measured to evaluate the fracture toughness of the specimen. Depending on the form of deformation, interlaminar fracture toughness is classified into Mode I (opening), Mode II (in-plane shear), and Mode III (anti-plane shear). Of these, a particularly important characteristic as an aircraft composite material is Mode-II interlaminar fracture toughness (GIIc). By using the thermosetting resin composition of the invention configured as above, a cured product with high GIIc, i.e., excellent toughness, is obtained. In the invention, a particularly preferred prepreg is such that a composite material obtained by molding/curing the prepreg has a GIIc of 2400 J/m² or more. GIIc herein is a value measured according to EN 6034.

As another characteristic that an aircraft composite material should have, impact resistance characteristics are mentioned. For the evaluation of impact resistance, compression strength after impact (CAI) is generally used. CAI is an approach in which predetermined energy is applied to a specimen, and the resulting residual compressive strength is evaluated. By using the thermosetting resin composition of the invention configured as above, a cured product with high compression strength after impact, i.e., excellent impact resistance, is obtained. In the invention, a particularly preferred prepreg is such that a composite material obtained by molding/curing the prepreg has a compression strength after impact of more than 240 MPa, particularly preferably 245 MPa or more. The compression strength after impact herein is a value measured according to EN 6038.

The method for producing the prepreg of the invention is not limited, and any of known methods can be used for production. Examples thereof include a so-called hot-melt method, in which the thermosetting resin composition of the invention is applied in the form of a thin film onto a release paper, and the resulting resin film released therefrom is laminated and formed on a fiber-reinforcing material in the form of a sheet so that the sheet is impregnated with the thermosetting resin composition, and a solvent method, in which the thermosetting resin composition is prepared in the form of a varnish using a suitable solvent, and a fiber-reinforcing material sheet is impregnated with the varnish. Of these, in particular, the prepreg of the invention can be suitably produced by the hot-melt method, a known production method.

The method for processing the thermosetting resin composition of the invention into a resin film or sheet is not limited, and may be any of known methods. More specifically, it can be obtained by casting on a substrate, such as a release paper or a film, by die extrusion, an applicator, a reverse roll coater, a comma coater, etc. The resin temperature during the film or sheet formation can be suitably set depending on the composition/viscosity of the resin. The same conditions as the kneading temperature in the thermosetting resin composition production method mentioned above can be suitably used.

The fiber-reinforcing material sheet herein refers to one form of the fiber-reinforcing material, and is reinforcing fibers in the form of a sheet, such as a woven fabric or a unidirectionally oriented product. The fiber-reinforcing material sheet and the resin film or sheet are not limited in size, etc. However, in the case of continuous production, in terms of productivity, the width thereof is preferably 30 cm or more. Although no upper limit is set, it is practically 5 m. When it is more than 5 m, production stability may decrease.
Further, in the case of continuous production, the production rate is not limited. However, in terms of productivity, economical efficiency, etc., it is not less than 0.1 m/min, more preferably not less than 1 m/min, and still more preferably not less than 5 m/min.

With respect to the impregnation pressure application upon the impregnation of the fiber-reinforcing material sheet in the form of a sheet with a resin sheet, any pressure may be employed considering the viscosity/resin flow of the resin composition, etc. The temperature of the resin sheet for the impregnation of the fiber-reinforcing material sheet is within a range of 50 to 150°C. When it is less than 50°C, the viscosity of the resin sheet is high, and the fiber-reinforcing material sheet may not be sufficiently impregnated therewith. When it is more than 150°C, this may initiate a curing reaction of the resin composition, resulting in a decrease in the storage stability or drape of the prepreg. It is preferably 60 to 145°C, and more preferably 70 to 140°C. The impregnation does not have to be done at once, and may be performed in two or more steps at arbitrary pressures and temperatures in a multi-step manner.

A composite material formed using the thus-obtained prepreg by molding, such as lamination, and curing has high wet heat resistance characteristics together with excellent impact resistance and interlaminar fracture toughness, and is suitable for application to an aircraft structural material.

### Examples

Hereinafter, the invention will be described in more detail through examples. Test methods used in the examples and comparative examples are as follows.

### [Tg under Dry Condition (DRY-Tg)]

Each resin composition was cured at 180°C for 2 hours. A specimen with a length of 50 mm, a width of 6 mm, and a thickness of 2 mm was cut from the obtained cured product. The specimen was conditioned in an atmosphere of 20°C and 50% RH for 40 hours or more, and then subjected to measurement under stress applied by three-point bending using a DMA analyzer (Rheogel-E4000 manufactured by UBM) at a temperature rise rate of 3°C/min and a frequency of 1 Hz. The evaluation of Tg was performed according to EN 6032 that employs the peak top of loss viscoelasticity (E").

### [Tg under Wet Condition (WET-Tg)]

Measurement was conducted in the same manner as above, except that the specimen was exposed to an atmosphere of 121°C and a saturated vapor pressure for 24 hours.

### [Measurement of Interlaminar Fracture Toughness (GIIc)]

The GIIc was measured as an index of toughness according to EN 6034. A prepreg obtained by a predetermined method is cut, and laminated in eight layers in the 0° direction to give a laminate. Two laminates were prepared. A release film for creating an initial crack was placed between the two laminates, and they were combined together to give a prepreg laminate with a thickness of about 3 mm having the laminated structure [0]₁₆. Using a vacuum autoclave molding method, molding was performed under a pressure of 0.49 MPa at 180°C for 2 hours. The obtained molded product was cut to a size of 25 mm in width x 110 mm in length or more to give a GIIc specimen. Using the specimen, a GIIc test was performed. That is, the specimen was placed in such a position that the crack created by the release film was located 35±1 mm from the supporting point, and a bending load was applied thereto at a rate of 1 mm/min to perform the GIIc test.

### [Measurement of Compression Strength after Impact (CAI)]

The compression strength after impact was measured as an index of impact resistance according to EN6038. A prepreg obtained by a predetermined method was cut and laminated to give a laminate having the laminated structure [+45/0/-45/90]_{3S}. Using an ordinary autoclave molding method, molding was performed under a pressure of 0.49 MPa at 180°C for 2 hours. The obtained molded product was cut to a size of 150 mm in the 0° direction and 100 mm in the 90° direction to give a specimen for a compression strength after impact (CAI) test. Using the specimen, the compression strength after impact (CAI) after an impact of 30 J was measured at room temperature (25°C, 50%RH).

### [Example 1]

Using 5 parts by weight of a thermoplastic polyimide Aurum PD450M manufactured by MITSUI CHEMICALS as the component [A-1] and 5 parts by weight of a polyetherimide Ultem 1010-1000 manufactured by GE PLASTICS as the component [A-2], a melt-blended resin was obtained using an extruder. The obtained blended resin had two separate Tgs, and observation under a microscope showed a phase-separated structure. The obtained blended resin was ground to give a 1- to 100-µm powder.

As thermosetting resins to serve as the component [B], a glycidyl-amino-group-containing polyfunctional epoxy resin (jER604 manufactured by JAPAN EPOXY RESINS), a bisphenol-type epoxy resin (jER828 manufactured by JAPAN EPOXY RESINS), and a urethane-modified bisphenol-A-type epoxy resin (Adeka Resin EPU-6 manufactured by ASAHI DENKA) were used in the blending ratio shown in Table 1. Further, 5 parts by weight of MR100 manufactured by NIPPON POLYURETHANE INDUSTRY was used as a polyisocyanate compound, 50 parts by weight of 4,4'-diaminodiphenylsulfone (4,4'-DDS) manufactured by WAKAYAMA SEIKA as the aromatic-amine-based curing agent [D], and 30 parts by weight of polyethersulfone (Sumika Excel PES5003P manufactured by SUMITOMO CHEMICAL (average particle diameter: 10 µm)) as a thermoplastic resin to serve as the component [C]. The raw materials and their compositions are shown in Table 1.

The above raw materials were blended according to the following procedure. First, jER604, jER828, and EPU-6 were heated/mixed in a kneader. To the obtained mixture was added MR100, and the mixture was further heated and mixed in the kneader to knead MR100 with the components jER604, jER828, and EPU-6. Subsequently, the obtained resin mixture was transferred to a roll mill, and the curing agent [D], the component [C], and the mixed resin particles of the component [A-1] and the component [A-2] were thoroughly kneaded to give an epoxy resin composition (thermosetting resin composition) of Example 1. The Tg (°C) under dry conditions (DRY) and Tg (°C) under wet conditions (WET) of the epoxy resin composition are shown in Table 1.

Using the epoxy resin composition obtained above, a prepreg was produced according to the following procedure. First, the epoxy resin composition was cast at 60°C using a film coater to give a resin film. A unidirectional fiber-reinforcing material (fiber areal weight: 190±10 g/m²) of carbon fibers manufactured by TOHO TENAX, Tenax (trademark of TOHO TENAX) HTA-3K (E30), was impregnated with the resin film, thereby giving a prepreg. The obtained prepreg had an areal weight (FAW) of 292 g/m² and a resin content (RC) of 35%. Using the obtained prepreg, a composite material (molded plate) was obtained and subjected to various measurements. The results are shown in Table 1.

### [Examples 2 to 4]

Melt-blended resins were obtained in the same manner as in Example 1, except that the blending ratio between the component [A-1] and the component [A-2] was changed as show in Table 1. In Examples 2 and 3, each obtained blended resin had two separate Tgs, and observation under a microscope showed a phase-separated structure. In Example 4, only one Tg was observed, and observation under a microscope showed that the two resins were compatibilized. Each obtained blended resin was ground to give a 1- to 100-µm powder.

As thermosetting resins to serve as the component [B], a glycidyl-amino-group-containing polyfunctional epoxy resin (jER604), a bisphenol-type epoxy resin (jER828), and a urethane-modified bisphenol-A-type epoxy resin (Adeka Resin EPU-6) were used in the blending ratio shown in Table 1. Further, 4,4'-diaminodiphenylsulfone (4,4'-DDS) and polyethersulfone (Sumika Excel PES5003P (average particle diameter: 10 µm)) were used as the aromatic-amine-based curing agent [D] and a thermoplastic resin to serve as the component [C], respectively, in the blending ratio shown in Table 1. In the same manner as in Example 1, thermosetting resin compositions, prepregs, and composite materials (molded plates) were obtained and subjected to various measurements. The results are shown in Table 1.

### [Example 5]

Using 45 parts by weight of a polyethylene naphthalate (PEN) Teonex (registered trademark) TN8065S manufactured by TEIJIN CHEMICALS as the component [A-1] and 45 parts by weight of a polyetherimide Ultem 1010-1000 as the component [A-2], a melt-blended resin was obtained using an extruder. The obtained blended resin had only one Tg, and observation under a microscope showed that the two resins were compatibilized. The obtained blended resin was ground to give a 1- to 100-µm powder. In otherwise the same manner as in Example 1, a thermosetting resin composition, a prepreg, and a composite material (molded plate) were obtained and subjected to various measurements. The results are shown in Table 1.

### [Example 6]

A melt-blended resin was obtained in the same manner as in Example 1, except that the blending ratio between the component [A-1] and the component [A-2] was changed as show in Table 1. The obtained blended resin had only one Tg, and observation under a microscope showed that the two resins were compatibilized. The obtained blended resin was ground to give a 1- to 100-µm powder.

As thermosetting resins to serve as the component [B], a glycidyl-amino-group-containing polyfunctional epoxy resin (jER604), a bisphenol-type epoxy resin (jER828), and a urethane-modified bisphenol-A-type epoxy resin (Adeka Resin EPU-6) were used in the blending ratio shown in Table 1. Further, 4,4'-diaminodiphenylsulfone (4,4'-DDS) and polyethersulfone (Sumika Excel PES5003P (average particle diameter: 10 µm)) were used as the aromatic-amine-based curing agent [D] and a thermoplastic resin to serve as the component [C], respectively, in the blending ratio shown in Table 1. In the same manner as in Example 1, a thermosetting resin composition, a prepreg, and a composite material (molded plate) were obtained and subjected to various measurements. The results are shown in Table 1.

### [Example 7]

Using 27 parts by weight of a thermoplastic polyimide Aurum PD450M as the component [A-1] and 3 parts by weight of polyethersulfone (Sumika Excel PES5003P (average particle diameter: 10 µm) ) as the component [A-2], a melt-blended resin was obtained. The obtained blended resin had only one Tg, and observation under a microscope showed that the two resins were compatibilized. The obtained blended resin was ground to give a 1- to 100-µm powder.

As thermosetting resins to serve as the component [B], a glycidyl-amino-group-containing polyfunctional epoxy resin (jER604), a bisphenol-type epoxy resin (jER828), and a urethane-modified bisphenol-A-type epoxy resin (Adeka Resin EPU-6) were used in the blending ratio shown in Table 1. Further, 4,4'-diaminodiphenylsulfone (4,4'-DDS) and polyethersulfone (Sumika Excel PES5003P (average particle diameter: 10 µm) ) were used as the aromatic-amine-based curing agent [D] and a thermoplastic resin to serve as the component [C], respectively, in the blending ratio shown in Table 1. In the same manner as in Example 1, a thermosetting resin composition, a prepreg, and a composite material (molded plate) were obtained and subjected to various measurements. The results are shown in Table 1.

### [Example 8]

Using 15 parts by weight of a polyethylene naphthalate (PEN) Teonex (registered trademark) TN8065S as the component [A-1] and 15 parts by weight of a polyetherimide Ultem 1010-1000 as the component [A-2], a melt-blended resin was obtained using an extruder. The obtained blended resin had only one Tg, and observation under a microscope showed that the two resins were compatibilized. The obtained blended resin was ground to give a 1- to 100-µm powder. In otherwise the same manner as in Example 1, a thermosetting resin composition, a prepreg, and a composite material (molded plate) were obtained and subjected to various measurements. The results are shown in Table 1.

### [Example 9]

Using 15 parts by weight of Aurum PD450M as the component [A-1] and 15 parts by weight of a polyethersulfone Sumika Excel PES5003P (average particle diameter: 10 µm) as the component [A-2], a melt-blended resin was obtained using an extruder. In otherwise the same manner as in Example 1 (however, PES5003P was used in an amount of 35 parts by weight), a thermosetting resin composition, a prepreg, and a composite material (molded plate) were obtained and subjected to various measurements. The results are shown in Table 1.

### [Comparative Example 1]

Using 150 parts by weight of Aurum PD450M as the component [A-1] and 150 parts by weight of a polyethersulfone Sumika Excel PES5003P (average particle diameter: 10 µm) as the component [A-2], a melt-blended resin was obtained using an extruder. In otherwise the same manner as in Example 1, a thermosetting resin composition and a prepreg were prepared. However, because the proportion of the thermoplastic resin component [A] was too high, the obtained resin composition and prepreg had poor handleability, and it was not possible to produce a composite material.

### [Comparative Example 2]

A thermosetting resin composition and a prepreg were produced in the same manner as in Example 1, except that as the component [A], 150 parts by weight of PEN and 150 parts by weight of Ultem 1010-1000 were used as the component [A-1] and the component [A-2], respectively. However, because the proportion of the thermoplastic resin component [A] was too high, the obtained resin composition and prepreg had poor handleability, and it was not possible to produce a composite material.

### [Comparative Examples 3 and 4]

Experiments were performed for the case of using no component [A]. As thermosetting resins to serve as the component [B], a glycidyl-amino-group-containing polyfunctional epoxy resin (jER604), a bisphenol-type epoxy resin (jER828), and a urethane-modified bisphenol-A-type epoxy resin (Adeka Resin EPU-6) were used in the blending ratio shown in Table 1. Further, 45 parts by weight of 4,4'-diaminodiphenylsulfone (4,4'-DDS) and Aurum PD450M, polyethersulfone (Sumika Excel PES5003P, average particle diameter: 10 µm), or amorphous nylon (Grilamid TR-55 manufactured by EMS-CHEMIE) were used as the aromatic-amine-based curing agent [D] and a thermoplastic resin to serve as the component [C], respectively, in the blending parts shown in Table 1. In otherwise the same manner as in Example 1, thermosetting resin compositions, prepregs, and composite materials (molded plates) were obtained and subjected to various measurements. The results are shown in Table 1.

The results in Table 1 show that the products of the examples of the invention have higher interlaminar fracture toughness (GIIc) and CAI than those of the comparative examples.

### [Examples 10 and 11]

Using a thermoplastic polyimide Aurum PD450M as the component [A-1] and a polyetherimide Ultem 1010-1000 as the component [A-2] in the blending ratio shown in Table 2, melt-blended resins were obtained in the same manner as in Example 1.

57 parts by weight of 4,4' -bismaleimide diphenylmethane (Matrimid 5292A: manufactured by HUNTSMAN) as a thermosetting resin to serve as the component [B] and 43 parts by weight of O,O'-diallyl bisphenol-A (Matrimid 5292B: manufactured by HUNTSMAN) as a curing agent [D] were blended according to the following procedure. First, the thermosetting resin [B] and the curing agent [D] were mixed in a kneader at 130°C for 60 minutes. The component [A] was thoroughly kneaded into the obtained mixture to give a bismaleimide resin composition. The Tg (°C) under dry conditions and Tg (°C) under wet conditions of each resin composition are shown in Table 2.

Using the bismaleimide resin composition obtained above, thermosetting resin compositions, prepregs, and composite materials (molded plates) were prepared in the same manner as in Example 1, and GIIc and CAI specimens were thus obtained. Using the specimens, GIIc and CAI tests were performed. The results are shown in Table 2.

### [Comparative Example 5]

A thermosetting resin composition, a prepreg, and a composite material (molded plate) were prepared in the same manner as in Example 1, except that Ultem 1010-1000 and Aurum 450M without melt-blending were used as the component [C] in place of the component [A]. GIIc and CAI specimens were thus obtained. Using the specimens, GIIc and CAI tests were performed. The results are shown in Table 2.

It is shown that as in the case of using an epoxy resin, higher interlaminar fracture toughness is obtained when a melt-blended thermoplastic resin component [A] is used.

### [Examples 12 and 13]

Using a thermoplastic polyimide Aurum PD450M or a PEN, Teonex (registered trademark) TN8065S as the component [A-1] and a polyetherimide Ultem 1010-1000 as the component [A-2] in the blending ratio shown in Table 3, melt-blended resins were obtained in the same manner as in Example 1.

Using 90 parts by weight of N-phenyl-bisphenol-A-benzoxazine (manufactured by SHIKOKU CHEMICALS) and 10 parts by weight of jER828 as thermosetting resins to serve as the component [B] and 25 parts by weight of PES5003P as a thermoplastic resin [C], thermosetting resin compositions, prepregs, and composite materials (molded plates) were obtained in the same manner as in Example 1. Various measurements were performed, and the results are shown in Table 3.

### [Comparative Example 6]

A thermosetting resin composition, a prepreg, and a composite material (molded plate) were prepared in the same manner as in Example 1, expect that no component [A] was used. GIIc and CAI specimens were thus obtained. Using the specimens, GIIc and CAI tests were performed. The results are shown in Table 3.

It is shown that as in the case of using an epoxy resin, higher interlaminar fracture toughness is obtained when a melt-blended thermoplastic resin component [A] is used.

**[Table 1]**

| Thermosetting Resin Composition | Ex.1 | Ex.2 | Ex.3 | Ex.4 | Ex.5 | Ex.6 | Ex.7 | Ex.8 | Ex.9 | Comp. Ex.1 | Comp. Ex.2 | Comp. Ex.3 | Comp. Ex.4 |
|---|---|---|---|---|---|---|---|---|---|---|---|---|---|
| Thermoplastic Resin Component [A] | | | | | | | | | | | | | |
| Component [A-1] | | | | | | | | | | | | | |
| Aurum 450M | 5 | 21 | 50 | 9 | | 27 | 27 | | 15 | 150 | | - | - |
| PEN | | | | | 45 | | | 15 | | | 150 | | |
| Component [A-2] | | | | | | | | | | | | | |
| Ultem 1010-1000 | 5 | 9 | 50 | 1 | 45 | 3 | - | 15 | - | - | 150 | - | - |
| PES5003P | | - | | | | - | 3 | - | 15 | 150 | | - | - |
| Tg of [A] | 220,233 | 220,234 | 220,233 | 223 | 167 | 232 | 239 | 167 | 227,240 | 227,240 | 167 | | |
| Total Amount of [A] | 10 | 30 | 100 | 10 | 90 | 30 | 30 | 30 | 30 | 300 | 300 | 0 | 0 |
| Thermosetting Resin [B] | | | | | | | | | | | | | |
| jER604 | 65 | 65 | 65 | 65 | 65 | 65 | 65 | 65 | 65 | 65 | 65 | 65 | 65 |
| jER828 | 15 | 15 | 15 | 15 | 15 | 15 | 15 | 15 | 15 | 15 | 15 | 15 | 15 |
| EPU6 | 20 | 20 | 20 | 20 | 20 | 20 | 20 | 20 | 20 | 20 | 20 | 20 | 20 |
| Thermoplastic Resin [C] | | | | | | | | | | | | | |
| PES5003P | 30 | 35 | 30 | 35 | 35 | 35 | 35 | 30 | 35 | 35 | 35 | 20 | |
| TR-55 | | | | | | | | | | | | 15 | |
| Aurum 450M | | | | | | | | | | | | | 35 |
| Curing Agent [D] 4,4'-DDS | 50 | 45 | 50 | 45 | 50 | 45 | 45 | 50 | 50 | 50 | 50 | 45 | 45 |
| Polyisocyanate | | | | | | | | | | | | | |
| Compound MR-100 | 5 | - | - | - | 5 | - | - | 5 | 5 | 5 | - | - | 5 |
| Total Amount of Resin Compound | 195 | 210 | 280 | 190 | 280 | 210 | 210 | 215 | 220 | 490 | 485 | 180 | 185 |
| DRY Tg (°C) | 211 | 212 | 210 | 211 | 210 | 213 | 212 | 210 | 213 | - | - | 211 | 211 |
| WET Tg(°C) | 160 | 159 | 156 | 160 | 156 | 157 | 157 | 156 | 158 | - | - | 160 | 160 |
| Gllc (J/m²) | 2100 | 3060 | 2120 | 2100 | 2050 | 2480 | 2400 | 2050 | 2300 | - | - | 2050 | 2000 |
| CAI (MPa) | 230 | 300 | 270 | 245 | 300 | 310 | 280 | 300 | 291 | - | - | 195 | 200 |

**[Table 2]**

| Thermosetting Resin Composition | Example 10 | Example 11 | Comparative Example 5 |
|---|---|---|---|
| Thermoplastic Resin Component [A] | | | |
| Component [A-1] | | | |
| Aurum 450M | 12.5 | 23 | - |
| PEN | | | |
| Component [A-2] | | | |
| Ultem 1010-1000 | 12.5 | 2 | - |
| PES5003P | | | - |
| Tg of [A] | 220,233 | 232 | 0 |
| Total Amount of [A] | 25 | 25 | 0 |
| Thermosetting Resin Component [B] | | | |
| 4,4'-Bismaleimide diphenylmethane | 57 | 57 | 57 |
| Thermoplastic Resin [C] | | | |
| Ultem 1010-1000 | | | 2 |
| Aurum 450M | | | 25 |
| Curing Agent | | | |
| O,O'-Diallyl bisphenol-A | 43 | 43 | 43 |
| Total Amount of Resin Compound | 125 | 125 | 127 |
| DRY Tg (°C) | 235 | 235 | 235 |
| WET Tg (°C) | 188 | 188 | 188 |
| Gllc (J/m²) | 2150 | 2050 | 1950 |
| CAI (MPa) | 315 | 335 | 263 |

**[Table 3]**

| Thermosetting Resin Composition | Example 12 | Example 13 | Comparative Example 6 |
|---|---|---|---|
| Thermoplastic Resin Component [A] | | | |
| Component [A-1] | | | |
| Aurum 450M | 12.5 | | - |
| PEN | | 12.5 | |
| Component [A-2] | | | |
| Ultem 1010-1000 | 12.5 | 12.5 | - |
| PES5003P | | | - |
| Tg of [A] | 220,233 | 167 | - |
| Total Amount of [A] | 25 | 25 | 0 |
| Thermosetting Resin Component [B] | | | |
| jER828 | 10 | 10 | 10 |
| N-Phenyl-bisphenol-A-benzoxazine | 90 | 90 | 90 |
| Thermoplastic Resin Component [C] | | | |
| PES5003P | 25 | 25 | 25 |
| Total Amount of Resin Compound | 150 | 150 | 125 |
| DRY Tg (°C) | 227 | 227 | 227 |
| WET Tg (°C) | 181 | 181 | 181 |
| Gllc (J/m²) | 1324 | 1241 | 1164 |
| CAI (MPa) | 268 | 292 | 250 |

## Claims

1. A thermosetting resin composition comprising at least a component [A] including thermoplastic resin particles and a thermosetting resin [B], **characterized in that** the thermoplastic resin particles include a melt blend of at least the following components [A-1] and [A-2] :
component [A-1] : a thermoplastic resin insoluble in the thermosetting resin [B]; and
component [A-2]: a thermoplastic resin soluble in the thermosetting resin [B].

2. A thermosetting resin composition according to claim 1, **characterized in that** the content of the component [A] including thermoplastic resin particles is 1 to 50% by weight of the thermosetting resin composition.

3. A thermosetting resin composition according to claim 1, **characterized in that** the component [A-1] and component [A-2] forming the component [A] including thermoplastic resin particles are in a non-compatibilized state in the particles.

4. A thermosetting resin composition according to claim 1, **characterized in that** the component [A-1] and component [A-2] forming the component [A] including thermoplastic resin particles are in a compatibilized state in the particles.

5. A thermosetting resin composition according to claim 1, **characterized in that** the thermosetting resin composition includes, in addition to the component [A] and the thermosetting resin [B], a thermoplastic resin [C] other than the component [A] and a curing agent [D].

6. A thermosetting resin composition according to claim 1, **characterized in that** the thermosetting resin [B] includes at least an epoxy resin.

7. A thermosetting resin composition according to claim 1, **characterized in that** the thermosetting resin [B] includes at least a tri- or higher functional epoxy resin.

8. A thermosetting resin composition according to claim 1, **characterized in that** the curing agent [D] includes at least an aromatic-amine-based curing agent.

9. Thermoplastic resin particles comprising a melt blend of at least the following components [A-1] and [A-2]:
component [A-1]: a thermoplastic resin insoluble in a thermosetting resin; and
component [A-2] : a thermoplastic resin soluble in a thermosetting resin,
**characterized in that** the component [A-1] and the component [A-2] are in a non-compatibilized state in the particles.

10. Thermoplastic resin particles comprising a melt blend of at least the following components [A-1] and [A-2]:
component [A-1]: a thermoplastic resin insoluble in a thermosetting resin; and
component [A-2]: a thermoplastic resin soluble in a thermosetting resin,
**characterized in that** the component [A-1] and the component [A-2] are in a compatibilized state in the particles.

11. A prepreg comprising a fiber-reinforcing material sheet impregnated with a thermosetting resin composition,
the thermosetting resin composition including at least a component [A] including thermoplastic resin particles and a thermosetting resin [B],
the thermoplastic resin particles including a melt blend of at least the following components [A-1] and [A-2]:
component [A-1] : a thermoplastic resin insoluble in the thermosetting resin [B]; and
component [A-2]: a thermoplastic resin soluble in the thermosetting resin [B].

12. A prepreg according to claim 11, **characterized in that** the component [A-1] and component [A-2] forming the component [A] including thermoplastic resin particles are in a non-compatibilized state in the particles.

13. A prepreg according to claim 11, **characterized in that** the component [A-1] and component [A-2] forming the component [A] including thermoplastic resin particles are in a compatibilized state in the particles.
